# EUROPEAN PATENT SPECIFICATION

(11) **EP 2 805 768 B1**
(45) Date of publication and mention of the grant of the patent: **02.08.2023**
(21) Application number: 14151608.8
(22) Date of filing: 17.01.2014
(51) Int. Cl.: B01J 37/03, B01J 37/32, B01J 23/38, B01J 23/75, B01J 35/06, B01J 37/00, D01F 9/04, H01M 8/00

(54) **Method of producing fiber catalyst and a fiber catalyst**
Verfahren zur Herstellung eines Faserkatalysators und ein Faserkatalysator
Procédé de production de catalyseur de fibre et catalyseur de fibre

(30) Priority: 23.05.2013 TW 102118297
(43) Date of publication of application: 26.11.2014
(73) Proprietor: Gunitech Corp., Hsinchu County 307 (TW)
(72) Inventor: KAO, Hsin-Yi, County 307 Qionlin Township Hsinchu (TW); CHENG, Tsai-Hsin, County 307 Qionlin Township Hsinchu (TW); CHOU, Po-Kuei, County 307 Qionlin Township Hsinchu (TW); LIN, Ssu-Tai, County 307 Qionlin Township Hsinchu (TW)
(74) Representative: van de Wal, Barend Willem

(56) References cited:
- WO-A1-2012/074160
- WO-A2-2012/058425
- US-A- 4 744 830
- US-A- 5 197 945
- KOBAYASHI Y ET AL: "Enzyme-Entrapping Behaviors in Alginate Fibers and Their Papers", BIOTECHNOLOGY AND BIOENGINEERING, WILEY & SONS, HOBOKEN, NJ, US, vol. 30, no. 3, 20 August 1987 (1987-08-20), pages 451-457, XP002233937, ISSN: 0006-3592, DOI: 10.1002/BIT.260300316

## Description

### BACKGROUND OF THE INVENTION

### Field of the Invention

The present invention relates to a method of producing a plurality of fiber catalysts; more particularly, the present invention relates to a method of producing hydrogen and a plurality of fiber catalysts having better reaction rates.

### Description of the Related Art

With the gradual depletion of conventional energy in the modern society, the development of environmentally friendly new energy has received increasing attention. Among the new energy, fuel cell technology has the advantages of high efficiency, low noise, and pollution-free, which satisfy the requirements of environmental protection by modern human. Fuel cell uses the fuel as the anode which reacts with catalysts to generate hydrogen ions and electrons whereas said produced electrons travel through the electronic circuit toward the cathode and said hydrogen ions penetrate the proton exchange membrane inside the fuel cell while moving toward the cathode. The movement of electrons and hydrogen ions described above thus forms a current.

The process, which the fuel cell generates hydrogen ions, needs catalysts to accelerate the reaction of generating hydrogen. The degree of catalyst activity can affect the time to produce hydrogen and the overall structure of a fuel cell design. The catalyst used in the conventional fuel cell to produce hydrogen is a metal active site supported on an organic carrier. However, the weight of the metal active site is only 10% of overall catalysts by weight whereas the organic carrier, which can not have the reaction of producing hydrogen, accounts for most of the catalysts. Therefore, it is difficult to improve the efficiency of hydrogen production. In addition, the hydrogen production process takes place in the triple phase points of the catalyst, fuel and liquid, and, in the later stage of hydrogen production process, byproducts of hydrogen production will hinder the flow of liquid resulting in a poor reaction rate of the fuel block in the later stage.

Therefore, it is necessary to provide a new catalyst, which can be used for producing hydrogen and have a good reaction rate.

### SUMMARY OF THE INVENTION

It is an object of the present invention to provide a method of producing a plurality of fiber catalysts, especially, a method of producing hydrogen and a plurality of fiber catalysts having better reaction rates.

To achieve the abovementioned object, a method is provided according to claim 1 which includes mixing a plurality of fiber material (10) and a solvent to form a solution, wherein the fiber material (10) has a structure of cellulose, hemicellulose, lignin, sodium alginate, chitosan, polyvinyl alcohol, polyacrylonitrile, polypropylene, polyethylene, polystyrene, polytetrafluoroethene, polyacrylic acid, polyvinylchloride, viscose fiber or a material selected from the group consisting of cellulose, hemicellulose, lignin, sodium alginate, chitosan, polyvinyl alcohol, polyacrylonitrile, polypropylene, polyethylene, polystyrene, polytetrafluoroethene, polyacrylic acid, polyvinylchloride, viscose fiber and a combination thereof, and which structure further comprises specific cation-exchange functional groups.

The method further includes injecting the solution through the spinneret of the spinning nozzle to form at least one specific shape fiber body and subjecting the at least one specific shape fiber body to a coagulation bath of metal salts, whereas the type of metal ions of the coagulation bath of metal salts is cobalt, gold, silver, palladium, platinum, rhodium, ruthenium, osmium, iridium, nickel, aluminum, tungsten or molybdenum.

The method of producing a plurality of fiber catalysts further includes the following steps of: washing the specific shape fiber body with water, drying the specific shape fiber body after washing it with water, and cutting or milling the at least one specific shape fiber body to form the plurality of fiber catalysts.

The method of producing a plurality of fiber catalysts further includes the following steps of: mixing the fiber catalyst, hot melt as adhesive agent, and sodium tetrahydridoborate as hydrogen fuel, wherein the fiber catalyst has a first melting point, and the adhesive agent has a second melting point; and filling the mixture of fiber catalyst, hot melt and sodium tetrahydridoborate into a mold to be heated to a temperature that is between the first melting point and the second melting point.

In one embodiment of the present invention, the method of producing a plurality of fiber catalysts further includes the following step of: mixing the reinforcing fibers and fiber catalysts.

### BRIEF DESCRIPTION OF THE DRAWINGS

FIG. 1 illustrates a flow chart of the method of producing a plurality of fiber catalysts of the first embodiment of the present invention.

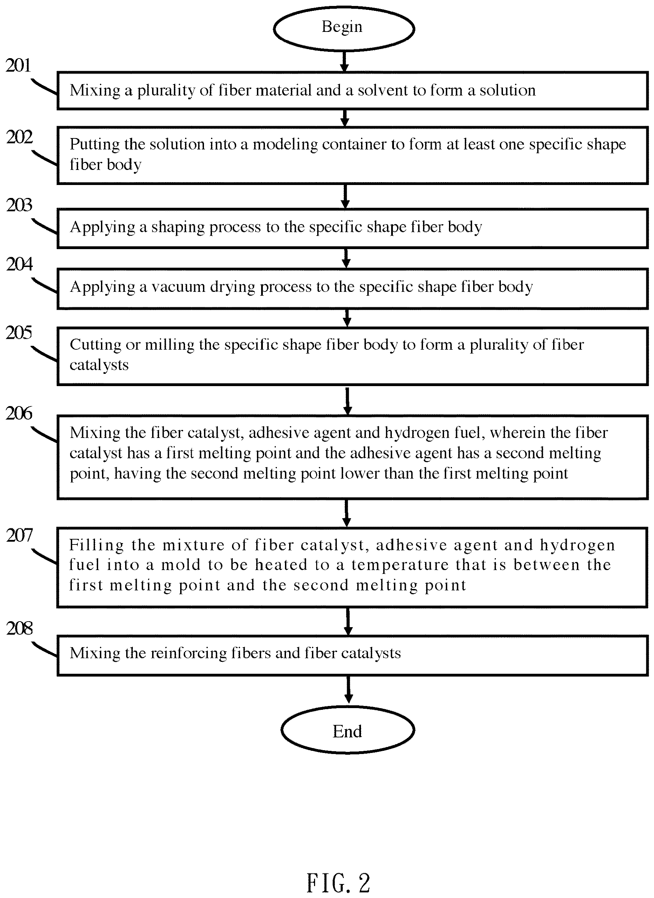

FIG. 2 illustrates a flow chart of the method of producing a plurality of fiber catalysts of the second embodiment of the present invention.
FIG. 3 illustrates a schematic diagram of a plurality of fiber catalysts of the embodiment of the present invention.

### DETAILED DESCRIPTION OF THE PREFERRED EMBODIMENT

These and other objects and advantages of the present invention will become apparent from the following description of the accompanying drawings, which disclose several embodiments of the present invention. It is to be understood that the drawings are to be used for purposes of illustration only, and not as a definition of the invention.

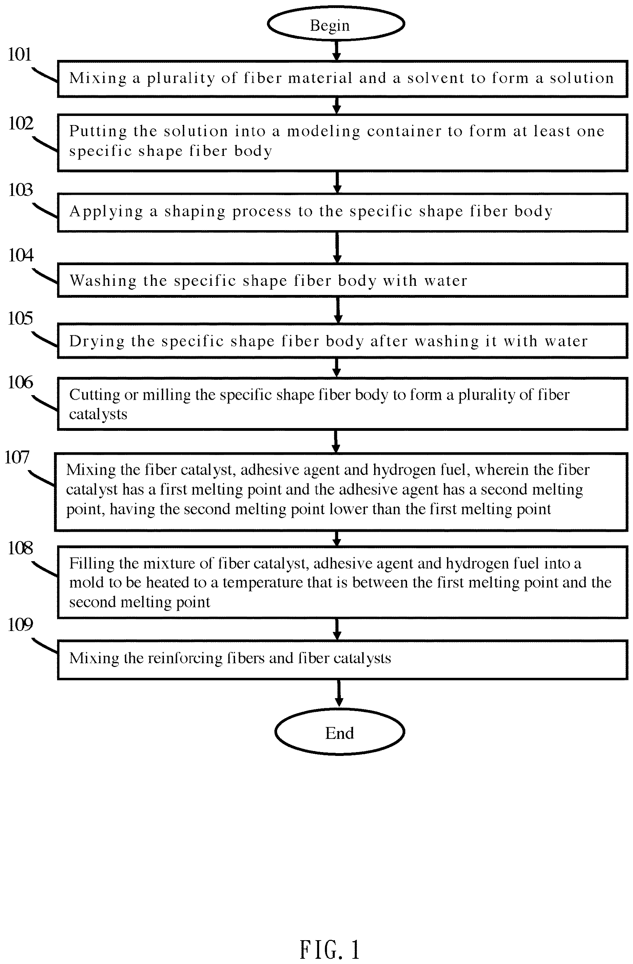

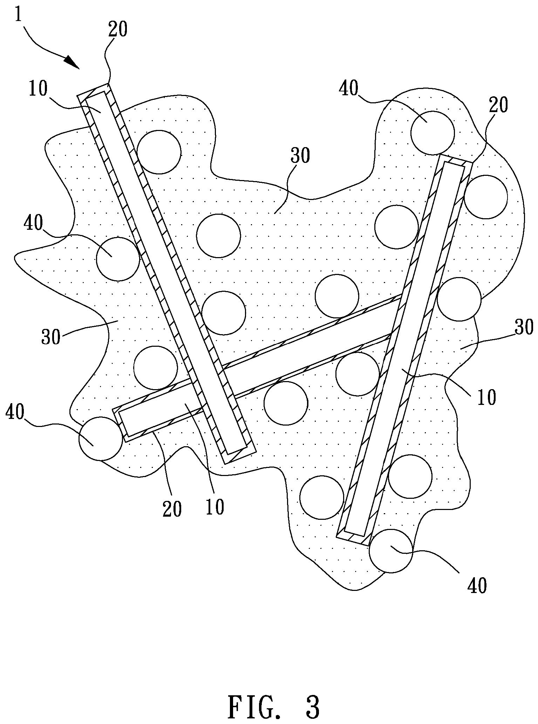

With reference to FIG. 1 and FIG. 3 of the method of producing a plurality of fiber catalysts of the first embodiment, FIG. 1 illustrates a flow chart of the method of producing a plurality of fiber catalysts of the first embodiment of the present invention; FIG. 3 illustrates a schematic diagram of a plurality of fiber catalysts of the embodiment of the present invention.

Step 101: Mix a plurality of fiber material and a solvent to form a solution.

In the first embodiment of the present invention, the plurality of fiber material 10 and a solvent are mixed and stirred to form a solution. In the first embodiment, the fiber material 10 is sodium alginate, but the fiber material 10 is not limited to sodium alginate , it can be other fiber material 10 whose structure contains specific cation-exchange functional groups, such as cellulose, hemicellulose, ligin, polyvinyl alcohol, polyacrylonitrile, polypropylene, polyethylene, polystyrene, polytetrafluoroethene, polyacrylic acid, polyvinylchloride, viscose fiber or the material selected from the group consisting of cellulose, hemicellulose, ligin, sodium alginate, chitosan, polyvinyl alcohol, polyacrylonitrile, polypropylene, polyethylene, polystyrene, polytetrafluoroethene, polyacrylic acid, polyvinylchloride, viscose fiber and a combination thereof; whereas the source of the fiber material 10 of the present invention can be, but not limited to, chitosan, natural cellulose or modified cellulose. The specific cation-exchange functional groups of the fiber material 10 of the present invention can be, but not limited to, acetate (-COO-), juan acid radical (-SO32-), phosphate (-HnPO3 (3-n) -, n = 1,2) or amino (-NH2 ). The specific cation-exchange functional groups of the fiber material 10 can be bonded to the metal ions to hold the metal ions fixedly on the fibers. The solvent of the first embodiment of the present invention is a combination of organic solvent of water, weak acid and ethanol, and however the materials of the solvent of the present invention are not limited to those described above.

Step 102: Put the solution into a modeling container to form at least one specific shape fiber body.

In the first embodiment of the present invention, the modeling container is a spinning nozzle. After the solution is put in the spinning nozzle, the solution is injected through the spinneret of the spinning nozzle to form a specific shape fiber body. In the first embodiment, the specific shape fiber body is a plurality of fiber filaments.

Step 103: Apply a shaping process to the specific shape fiber body.

In the first embodiment of the present invention, the shaping process is a coagulation bath of metal salts. The coagulation bath of metal salts of the first embodiment uses cobalt chloride solution. However, the component of the coagulation bath of metal salts of the present invention is not limited to the one described above. The metal ions used in the coagulation bath of metal salts can also be gold (Au), silver (Ag), palladium (Pd), platinum (Pt), rhodium (Rh), ruthenium (Ru), osmium (Os), iridium (Ir), Nickel (Ni), aluminum (Al), tungsten (W) or molybdenum (Mo), which can be combined with the polyvalent metal ions of the specific cation-exchange functional groups of the fiber material 10 to form a structure having special properties. After the solution is placed in the spinning nozzle and is extruded from the spinneret of the spinning nozzle, to form of a specific shape fiber body of fiber filaments, the specific shape fiber body of fiber filaments is put through the coagulation bath of metal salts immediately. Thereby, the metal ion of cobalt (Co²⁺) of the coagulation bath of metal salts can undergo ion exchange with the sodium ion (Na⁺) of the specific cation-exchange functional groups of the specific shape fiber body of the fiber material 10, and can become solidified on the surface of the specific shape fiber body of the fiber material 10, to form a water-insoluble cortex 20 of cobalt alginate (as shown in FIG. 3), in order to keep the form of the specific shape fiber body to remain fixedly. The interaction force, which causes the metal ions and the specific cation-exchange functional groups to be bonded together, is Coulomb force, chelation, or covalent bonding force. With said interaction force, the metal ions and the specific cation-exchange functional groups are bonded together, to form a ring-like structure of chelate whereas said ring-like structure of chelate can provide a good stable efficacy.

Step 104 : Wash the specific shape fiber body with water.

After the specific shape fiber body has passed the coagulation bath of metal salts, the specific shape fiber body is placed and immersed in water so that the metal ions and other remaining ions of metal salts that are not bonded to the fiber material 10 in the solution are washed away.

Step 105: Dry the specific shape fiber body after washing it with water.

The specific shape fiber body is moved from water, and then is heated and dried to remove the moisture. However, the drying process of the present invention is not limited to heating and drying, and also can be freeze-dry or air-dry.

Step 106: Cut or mill the specific shape fiber body to form a plurality of fiber catalysts.

Using the method of milling or cutting, the specific shape fiber body is divided into a certain size to form a plurality of fiber catalysts 1, whereas the specific size of the present invention is 0.01 to 5mm in length and 10-100um in diameter. Nevertheless, the size of the specific shape fiber body of the present invention is not limited to said sizes described above, and the size of the specific shape fiber body can change according to the design requirement.

Step 107: Mix the fiber catalyst, adhesive agent and hydrogen fuel, wherein the fiber catalyst has a first melting point and the adhesive agent has a second melting point, having the second melting point lower than the first melting point.

In the first embodiment of the present invention, the fiber catalyst 1, adhesive agent 30 and hydrogen fuel 40 are mixed together. The adhesive agent 30 of the present invention is hot melt powder and the hydrogen fuel 40 is sodium tetrahydridoborate. The fiber catalyst 1 has a first melting point; the adhesive agent 30 has a second melting point; and the second melting point of the adhesive agent 30 is lower than the first melting point of the fiber catalyst 1. However, the types of adhesive agent 30 and hydrogen fuel 40 of the present invention are not limited to those described above.

Step 108: Fill the mixture of fiber catalyst, adhesive agent and hydrogen fuel into a mold to be heated to a temperature that is between the first melting point and the second melting point.

The mixture of fiber catalyst 1, adhesive agent 30 and hydrogen fuel 40 are filled into a model to be heated to a temperature that is between the first melting point and the second melting point, to cause the adhesive agent 30 to melt. As shown in FIG. 3, the fiber catalyst 1 and hydrogen fuel 40 can be bonded to each other through the melted adhesive agent 30.

Step 109: Mix the reinforcing fibers and fiber catalysts.

The reinforcing fibers and fiber catalysts are mixed to strengthen the structure of the fiber catalysts. The reinforcing fiber of the present invention is the rayon fiber. However, the present invention is not limited to said rayon fiber and can be other fibers with strengthening efficacy. shape fiber body in the shape of rectangular parallelepiped. However, the modeling container is not limited to be a rectangular parallelepiped and can also be a container of other shapes, such that after the solution is placed in the modeling container, it then forms a specific shape fiber body corresponding to the shape of the modeling container.

Step 203: Apply a shaping process to the specific shape fiber body.

In the second embodiment, the shaping process is a freezing process, wherein the specific shape fiber body placed in the modeling container is frozen into a solid state in an environment below 0°C. However, the temperature of the freezing process of the present invention is not limited to temperatures below 0 °C.

Step 204: Apply a vacuum drying process to the specific shape fiber body.

In the second embodiment, after the freezing process has been applied to the specific shape of the fiber body, the specific shape fiber body undergoes a vacuum drying process in an environment below 0°C to remove the excess moisture.

Step 205: Cut or mill the specific shape fiber body to form a plurality of fiber catalysts.

After the specific shape fiber body is removed from the modeling container, using the method of milling or cutting, such that the specific shape fiber body is divided into a certain size to form a plurality of fiber catalysts 1. The size of the specific shape fiber body of the present invention is 0.01 to 5mm in length and 10-100um in diameter. However, the size of the specific shape fiber body of the present invention is not limited to said sizes described above, and the size of the specific shape fiber body can change according to the design requirement.

Step 206: Mix the fiber catalyst, adhesive agent and hydrogen fuel, wherein the fiber catalyst has a first melting point and the adhesive agent has a second melting point, having the second melting point lower than the first melting point.

In the second embodiment of the present invention, the fiber catalyst 1, adhesive agent 30 and hydrogen fuel 40 are mixed together. The adhesive agent 30 of the present invention is hot melt powder and the hydrogen fuel 40 is sodium tetrahydridoborate. The fiber catalyst 1 has a first melting point; the adhesive agent 30 has a second melting point; and the second melting point of the adhesive agent 30 is lower than the first melting point of the fiber catalyst 1. However, the types of adhesive agent 30 and hydrogen fuel 40 of the present invention are not limited to those described above.

Step 207: Fill the mixture of fiber catalyst, adhesive agent and hydrogen fuel into a mold to be heated to a temperature that is between the first melting point and the second melting point.

The mixture of fiber catalyst 1, adhesive agent 30 and hydrogen fuel 40 are filled into a mold to be heated to a temperature that is between the first melting point and the second melting point, to cause the adhesive agent 30 to melt. As shown in FIG. 3, the fiber catalyst 1 and hydrogen fuel 40 can be bonded to each other through the melted adhesive agent 30.

Step 208: Mix the reinforcing fibers and fiber catalysts.

The reinforcing fibers and fiber catalysts 1 are mixed to strengthen the structure of the fiber catalyst 1. The reinforcing fiber of the present invention is the rayon fiber. However, the present invention is not limited to said rayon fiber and can be other fibers with strengthening efficacy.

Using the method of producing the fiber catalyst 1 described above, a fiber catalyst 1 which can generate hydrogen is produced. The fiber catalysts 1, produced in accordance with the method of the present invention, uses a natural fiber material 10 as the base material wherein the cost is low, size is small, and the hydrophilicity and porous structure are excellent in order to increase the reaction rate of generating hydrogen.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

## Claims

1. A method of producing a mixture wherein a plurality of fiber catalysts (1) is produced using a method comprising the following steps of:
mixing a plurality of fiber material (10) and a solvent to form a solution, wherein the fiber material (10) has a structure of cellulose, hemicellulose, lignin, sodium alginate, chitosan, polyvinyl alcohol, polyacrylonitrile, polypropylene, polyethylene, polystyrene, polytetrafluoroethene, polyacrylic acid, polyvinylchloride, viscose fiber or a material selected from the group consisting of cellulose, hemicellulose, lignin, sodium alginate, chitosan, polyvinyl alcohol, polyacrylonitrile, polypropylene, polyethylene, polystyrene, polytetrafluoroethene, polyacrylic acid, polyvinylchloride, viscose fiber and a combination thereof, and which structure further comprises specific cation-exchange functional groups;
injecting the solution through the spinneret of the spinning nozzle to form at least one specific shape fiber body;
subjecting the at least one specific shape fiber body to a coagulation bath of metal salts, whereas the type of metal ions of the coagulation bath of metal salts is cobalt, gold, silver, palladium, platinum, rhodium, ruthenium, osmium, iridium, nickel, aluminum, tungsten or molybdenum;
washing the specific shape fiber body with water,
drying the specific shape fiber body after washing with water, and
cutting or milling the at least one specific shape fiber body to form the plurality of fiber catalysts (1), and
mixing the fiber catalyst, hot melt powder and sodium tetrahydridoborate, wherein the fiber catalyst has a first melting point and the hot melt powder being a hot melt having a second melting point, having the second melting point lower than the first melting point and
filling the mixture of fiber catalyst, hot melt and sodium tetrahydridoborate into a mold heating it to a temperature that is between the first melting point and the second melting point.

2. The method as claimed in claim 1, further comprising the following step of:
mixing a plurality of rayon fibers and the plurality of fiber catalysts (1).

## Patentansprüche

1. Verfahren zur Herstellung eines Gemischs, wobei eine Vielzahl von Faserkatalysatoren (1) unter Verwendung eines Verfahrens hergestellt wird, das die folgenden Schritte umfasst:
Mischen einer Vielzahl von Fasermaterial (10) und eines Lösungsmittels, um eine Lösung zu bilden, wobei das Fasermaterial (10) eine Struktur von Cellulose, Hemicellulose, Lignin, Natriumalginat, Chitosan, Polyvinylalkohol, Polyacrylnitril, Polypropylen, Polyethylen, Polystyrol, Polytetrafluorethylen, Polyacrylsäure, Polyvinylchlorid, Viskosefaser oder ein Material ausgewählt aus der Gruppe bestehend aus Cellulose Hemicellulose, Lignin, Natriumalginat, Chitosan, Polyvinylalkohol, Polyacrylnitril, Polypropylen, Polyethylen, Polystyrol, Polytetrafluorethylen, Polyacrylsäure, Polyvinylchlorid, Viskosefaser und einer Kombination davon aufweist, wobei die Struktur ferner spezifische Kationenaustauschfunktionelle Gruppen umfasst;
Einspritzen der Lösung durch die Spinndüse des Spinndüsenkopfs, um wenigstens einen Faserkörper mit spezifischer Form zu bilden;
Unterwerfen des wenigstens einen Faserkörpers mit spezifischer Form an ein Koagulationsbad von Metallsalzen, wobei der Typ von Metallionen des Koagulationsbads von Metallsalzen Cobalt, Gold, Silber, Palladium, Platin, Rhodium, Ruthenium, Osmium, Iridium, Nickel, Aluminium, Wolfram oder Molybdän ist;
Waschen des Faserkörpers mit spezifischer Form mit Wasser,
Trocknen des Faserkörpers mit spezifischer Form nach dem Waschen mit Wasser, und
Schneiden oder Mahlen des wenigstens einen Faserkörpers mit spezifischer Form, um die Vielzahl von Faserkatalysatoren (1) zu bilden, und
Mischen des Faserkatalysators, von Hotmeltpulver und Natriumtetrahydridoborat, wobei der Faserkatalysator einen ersten Schmelzpunkt aufweist und das Hotmeltpulver ein Hotmelt mit einem zweiten Schmelzpunkt ist, wobei der zweite Schmelzpunkt niedriger als der erste Schmelzpunkt ist, und
Füllen des Gemischs von Faserkatalysator, Hotmelt und Natriumtetrahydridoborat in ein Formwerkzeug und Erhitzen auf eine Temperatur, die zwischen dem ersten Schmelzpunkt und dem zweiten Schmelzpunkt liegt.

2. Verfahren gemäß Anspruch 1, ferner umfassend den folgenden Schritt:
Mischen einer Vielzahl von Rayonfasern und der Vielzahl von Faserkatalysatoren (1).

## Revendications

1. Procédé de production d'un mélange dans lequel une pluralité de catalyseurs fibreux (1) est produite en utilisant un procédé comprenant les étapes suivantes consistant à :
mélanger une pluralité de matériaux de fibre (10) et un solvant pour former une solution, dans lequel le matériau de fibre (10) a une structure de cellulose, d'hémicellulose, de lignine, d'alginate de sodium, de chitosane, d'alcool polyvinylique, de polyacrylonitrile, de polypropylène, de polyéthylène, de polystyrène, de polytétrafluoroéthène, d'acide polyacrylique, de polychlorure de vinyle, de fibre de viscose ou d'un matériau choisi dans le groupe constitué par la cellulose, l'hémicellulose, la lignine, l'alginate de sodium, le chitosane, l'alcool polyvinylique, le polyacrylonitrile, le polypropylène,
le polyéthylène, le polystyrène, le polytétrafluoroéthène, l'acide polyacrylique, le polychlorure de vinyle, la fibre de viscose et une combinaison de ceux-ci, et laquelle structure comprend en outre des groupements fonctionnels échangeurs de cations spécifiques ;
injecter la solution à travers la filière de la buse rotative pour former au moins un corps de fibre de forme spécifique ;
soumettre l'au moins un corps de fibre de forme spécifique à un bain de coagulation de sels métalliques, tandis que le type d'ions métalliques du bain de coagulation de sels métalliques est le cobalt, l'or, l'argent, le palladium, le platine, le rhodium, le ruthénium, l'osmium, l'iridium, le nickel, l'aluminium, le tungstène ou le molybdène ;
laver le corps de fibre de forme spécifique avec de l'eau,
sécher le corps de fibre de forme spécifique après le lavage avec de l'eau, et
couper ou broyer l'au moins un corps de fibre de forme spécifique pour former la pluralité de catalyseurs fibreux (1), et
mélanger le catalyseur fibreux, la poudre de mélange fondu à chaud et le tétrahydridoborate de sodium, dans lequel le catalyseur fibreux a un premier point de fusion et la poudre de mélange fondu à chaud étant un mélange fondu à chaud ayant un second point de fusion, le second point de fusion étant inférieur au premier point de fusion et
introduire le mélange de catalyseur fibreux, de mélange fondu à chaud et de tétrahydridoborate de sodium dans un moule et le chauffer jusqu'à une température qui est comprise entre le premier point de fusion et le second point de fusion.

2. Procédé selon la revendication 1, comprenant en outre l'étape suivante consistant à :
mélanger une pluralité de fibres rayonnes et la pluralité de catalyseurs fibreux (1).
